# EUROPÄISCHE PATENTSCHRIFT

(11) **EP 2 519 739 B1**
(45) Veröffentlichungstag und Bekanntmachung des Hinweises auf die Patenterteilung: **12.08.2015**
(21) Anmeldenummer: 10814644.0
(22) Anmeldetag: 30.12.2010
(51) Int. Cl.: F03B 17/06

(54) **TURBINENANORDNUNG ZUR UMWANDLUNG VON IN EINER STRÖMUNG EINES FLUIDS ENTHALTENER ENERGIE IN ELEKTRISCHE ENERGIE**
TURBINE ARRANGEMENT FOR CONVERTING ENERGY CONTAINED IN A FLOW OF A FLUID INTO ELECTRICAL ENERGY
ENSEMBLE TURBINE POUR LA CONVERSION EN ÉNERGIE ÉLECTRIQUE D'UNE ÉNERGIE CONTENUE DANS L'ÉCOULEMENT D'UN FLUIDE

(30) Priorität: 30.12.2009 DE 102009060763
(43) Veröffentlichungstag der Anmeldung: 07.11.2012
(73) Patentinhaber: Habek, Nenad, 01217 Dresden (DE); Höfgen, Siegfried, 01920 Steina (DE); Langlotz, Holger, 99867 Gotha (DE); Schuler, Alfred, 86343 Königsbrunn (DE)
(72) Erfinder: Habek, Nenad, 01217 Dresden (DE); Höfgen, Siegfried, 01920 Steina (DE); Langlotz, Holger, 99867 Gotha (DE); Schuler, Alfred, 86343 Königsbrunn (DE)
(74) Vertreter: Schwarz, Diethelm
(86) Internationale Anmeldenummer: PCT/DE2010/001526
(87) Internationale Veröffentlichungsnummer: WO 2011/079840

(56) Entgegenhaltungen:
- WO-A1-02/061273
- WO-A1-2005/111413
- CA-A1- 2 432 567
- DE-U1- 29 721 671
- FR-A- 557 189
- US-A- 4 218 175

## Beschreibung

Die Erfindung betrifft eine Turbinenanordnung zur Umwandlung von in einer Strömung eines Fluids enthaltener Energie in elektrische Energie gemäß Anspruch 1.

Bekannt sind Turbinen zur Umwandlung von Wind- und Wasserkraft in Elektroenergie verschiedenster Größen und Bauausführungen.

Zum Stand der Technik zählt der Strömungswandler gemäß der DE 10 2008 032 411.6 A1 bei dem in einem abgedichteten Turbinenkegel mit am Umfang angeordneten durchgängigen Schraubenblättern in nicht näher bezeichnetem Winkel alle Aggregate zur Drehzahl- und Energieumwandlung integriert sind.

Bekannt ist aus der DE 297 21 671 U1 auch eine Schraube zur Aufnahme der Energie von fließendem Wasser oder bewegter Luft, die sich durch zwei bis fünf, auf einen hohlen, mit dem Strömungsmedium flutbaren Kegel aufgebrachte umlaufende, einwindige Schraubenblätter auszeichnet, wobei der Durchmesser der Schraube gleich der Länge derselben entspricht und der Kegelboden halb so groß wie der Schraubendurchmesser ist.

Weiterhin ist aus dem US 4,722,665 eine Turbine bekannt, bei der in einem Hohlkegel ein Getriebe und mehrere Generatoren angeordnet sind, und am Umfang des Turbinenkörpers fünf bis zwölf Blätter mit einer vom Hohlkegel abweichenden Steigung angebracht sind.

Auch sind nach US 1 191 950 und FR 557 189 zweifach außerhalb des kegelförmigen Turbinenkörpers gelagerte Kegelturbinen zur Wasserkraftnutzung bekannt. In den Schriften US 188 020 und FR 827 487 werden einseitig außerhalb des kegelförmigen Turbinenkörpers gelagerte Kegelturbinen zur Windkraftnutzung beschrieben.

Die WO 95 24562 beschreibt eine Axialströmungsturbine, die aus einer Rotationseinheit und einer festen Einheit als Vorleiteinheit in einem Rohrleitungssystem gebildet wird. Durch ihre Rumpf-sowie Blattgeometrie wird ein konstanter statischer Druck in der Turbine ermöglicht.

Die im Stand der Technik beschriebenen Turbinen sind in ihrer äußeren Form der hier beschrieben Turbine ähnlich, jedoch weder in ihrer Art der Schaufelwinkelgestaltung zur Türbinenachse noch zur Achse des Strömungsmediums näher beschrieben, so dass bei entsprechender erfindungsgemäßer Ausgestaltung kein Optimum der Nutzung der Strömungsenergie erzielt wird. Weiterhin sind an den Schraubenblättern der bekannten Turbinenausführungen keine zusätzlichen Winkeländerungen in Form von Blattverschränkungen oder zusätzlichen Aufsätzen zur Erfassung oder Lenkung des Energiestromes angebracht.

Bei der Axialturbine gemäß der WO 95/24562 wird zwar ein gleichmäßiger Strom durch die Turbine erzielt, welcher aber durch die Verwendung eines gleich bleibenden Rohrquerschnittes beim Einsatz in Fließgewässern nicht von Vorteil ist und wegen der fehlenden Entspannung des Wasserstromes nach der Leistungsabgabe zu einer Effizienzminderung der Turbine führt.

Aus der WO 02/061273 ist ein Energie-Erzeugungssystem für Flüssigkeitsströmungen bekannt, bei dem ein Turbinenkörper unterschiedliche, eine Kegelform umfassende Geometrien aufweisen kann. Turbinenschaufeln können um 45 Grad zur Hauptachse abgewinkelt sein. Die CA 2 432 567 A1 schließlich offenbart ein Windturbinenrad zur Stromerzeugung.

Der Erfindung liegt die Aufgabe zugrunde, eine geometrische Anordnung von Schraubenblättern einer Turbine so zu entwickeln, dass sie durch einen optimalen Winkelstellungsbereich gegenüber der Strömungsrichtung des Strömungsmediums sowie durch Maßnahmen auf den Schraubenblättern selbst eine zusätzliche Effizienzerhöhung und durch eine optimale Gestaltung des Strömungskanals eine bestmögliche Energieausnutzung des Strömungsmediums zur Folge hat.

Diese Aufgabe wird erfindungsgemäß durch den Gegenstand des Anspruchs 1 gelöst.

Demgemäß sieht die eine Turbinenanordnung zur Umwandlung von in einer Strömung eines Fluids enthaltener Energie, insbesondere kinetischer Energie bzw. Strömungsenergie, in elektrische Energie vor. Die Turbinenanordnung enthält ein Gehäuseelement zur Aufnahme von Energiewandelungseinrichtungen und Anschlüssen zur Energieabführung, wenigstens eine Turbineneinrichtung mit einem gegenüber dem Gehäuseelement drehbaren Turbinenkörper, an dessen Umfang wenigstens eine Turbinenschaufel zum Angriff der Strömung zur Einleitung einer Drehbewegung vorgesehen ist, wobei die Turbineneinrichtung in einer Anströmungsrichtung im Wesentlichen kegelförmig ausgebildet ist. Die wenigstens eine Turbinenschaufel bildet bezüglich einer Hauptachse der Turbinenanordnung einen Winkel von 45° bis 65°. Die erfindungsgemäße Turbinenanordnung zeichnet sich dadurch aus, dass die wenigstens eine Turbinenschaufel an ihrer der Strömung abgewandten Stirnseite eine abgewinkelte, zur Richtungsänderung der Strömung und damit zur Begünstigung der Drehung des Turbinenkörpers bestimmte Leiteinrichtung aufweist.

Als Fluid wird im Rahmen der Erfindung eine Flüssigkeit wie Wasser, ein Gas oder eine Gasmischung und/oder ein Dampf angesehen. Bevorzugt ist die erfindungsgemäße Anordnung zum Einsatz in einer Flüssigkeitsströmung, insbesondere wässrigen Strömung vorgesehen. Dort ist die Energiedichte von Vorteil.

Erfindungsgemäß sind Schraubenblätter der Turbine bzw. Turbineneinrichtung in einem Winkelbereich von 45° bis 65° gegenüber der Strömungsrichtung auf dem drehbaren Turbinenkörper angebracht.

Mit der erfindungsgemäßen Turbinenanordnung können mit Vorteil durch eine optimale Ausgestaltung und deren günstige Anordnung von Teilen besonders effizient die mechanischen Energien von Strömungsmedien zur Erzeugung elektrischer Energie eingesetzt werden. Die erfindungsgemäße Anordnung kann in unterschiedlichen Strömungen eingesetzt werden. Neben Meeren, Flussläufen, Abläufen von Talsperren, Biosiloanlagen bilden auch Brauch- und Abwasserleitungen bzw. -systeme einen idealen Einsatzort zur Energieumwandlung. Dabei versteht es sich, dass die Dimensionierung der Anordnung neben den räumlichen Verhältnissen auch den auftretenden Fließgeschwindigkeiten anpassbar gewählt werden können.

Weitere Vorteile ergeben sich aus den in den Unteransprüchen definierten Ausführungsformen der Erfindung.

In einer Ausführung befinden sich auf einem kegelförmigen Turbinenkörper am Umfang spiralförmig angeordnete Schraubenblätter. Dabei können sich je nach Ausführungsform der Turbine bzw. Turbineneinrichtung der Turbinenkörper oder ein hinter einem fest installierten Kegel befindliches Turbinenlaufrad um die eigene Achse drehen. Die auf den drehenden Turbinenrädern befindliche Schraubenblätter weisen einen optimalen Anstellwinkelbereich von 55° bis 65° zur Strömungsachse des Strömungsmediums auf und können zudem noch mit einer Winkeländerung am Ende der Blätter in oder gegen die Strömungsrichtung versehen sein, um weitere Energieeffekte positiv nutzen zu können. Zusätzliche Blattwinkeländerungen können an dem Schraubenblatt vorgenommen werden und bei Anordnung in einem Rohr durch dessen optimale Querschnittsgestaltung weitere positive Effekte erzielt werden. In einer Ausführungsform der erfindungsgemäßen Turbinenanordnung ist der Turbinenkörper im Wesentlichen kegelförmig ausgeführt und weist an seinem Umfang wenigstens eine wendelartige Turbinenschaufel auf. Die wenigstens eine Turbinenschaufel kann aus einem geraden Element gebildet sein, bevorzugt ist sie aber wendelartig ausgeführt. Dabei sind besonders bevorzugt wenigstens drei wendelartige Turbinenschaufeln versetzt zueinander vorgesehen. Die wendelartigen Turbinenschaufeln werden in der nachfolgenden Detailbeschreibung auch als Schraubenwendeln bezeichnet.

Bei einer geometrischen Anordnung von Teilen eines Energiewandlers gemäß der Erfindung sind Schraubenwendeln auf einem Kegel gegenüber einer Turbinenhauptachse in einem Winkelbereich von 45° bis 65° aufgebracht. Bei einer Verwendung eines starren, kegeligen Vorleitrades, weisen darauf angebrachte Schraubenwendeln einen Winkelbereich von 15° bis 25° gegenüber der Hauptachse der Anordnung auf. Ein dann dahinter drehbar angeordnetes Turbinenrad ist mit in ihrer Anzahl gegenüber den Schraubenwendeln vermehrten, gegenläufig und in ungerader Anzahl angebrachten Turbinenschaufeln versehen, wobei die Turbinenschaufeln gegenüber der Turbinenhauptachse unter einem Winkelbereich von 55° bis 65° angeordnet sind. Bei einem Einsatz der Turbinen in einem Strömungskanal entspricht dieser vor der Turbine ungefähr dem Maximaldurchmesser der Turbine und weitet sich im Bereich der Kegelspitze derart in Strömungsrichtung gleichmäßig so auf, dass ein Querschnitt hinter der Turbine ungefähr dem Zwei- bis Dreifachen des Durchflussquerschnittes der Turbine zwischen Außendurchmesser und Grundkegeldurchmesser des Kegels entspricht.

Es hat sich als besonders vorteilhaft erwiesen, wenn die Schraubenwendeln auf dem rotierenden, als Kegel ausgeführten Turbinenkörper einer Turbine bzw. Turbineneinrichtung im Winkel von 60° zur Hauptachse der Anordnung und Turbineneinrichtung, welche auch die Strömungshauptachse ist, angebracht sind.

Die Turbineneinrichtung kann in einer anderen Ausführung der erfindungsgemäßen Turbinenanordnung auch ein in Anströmungsrichtung vorgesehenes kegelförmiges Vorleitelement aufweisen, an das sich in Abströmungsrichtung ein als Turbinenrad ausgebildeter Turbinenkörper anschließt, wobei der Turbinenkörper gegenüber dem Vorleitelement drehbar ist. Das Vorleitelement weist in bevorzugter Ausführung wendelförmige und in einem Winkel von zwanzig Grad zu der Hauptachse der Turbinenanordnung vorgesehene Leitstücke auf, die gegenläufig zu den Turbinenschaufeln angeordnet sind. Besonders bevorzugt ist die Anzahl der nachfolgend auch als Schraubenwendeln bezeichneten Leitstücke kleiner als eine Anzahl der Turbinenschaufeln.

Erfindungsgemäß kann die Leiteinrichtung durch Abkröpfen der Leitelement entgegen der Strömungsrichtung gebildet sein. Möglich ist es auch, die Leiteinrichtung aus einem zumindest an einer Seite fest oder drehgelenkig mit der Turbinenschaufel verbundenen Bauelement auszuführen. Die Richtungsänderung der Strömung kann bei der geometrischen Anordnung auf dem Rotorblatt des Turbinenkörpers auch in vorteilhafter Weise durch das Aufbringen einer zusätzlichen Leiteinrichtung am Ende der Schraubenwendel realisiert werden, die den Rotationsstrom des Mediums noch besser erfasst und die Drehung des Turbinenkörpers begünstigt.

Die erfindungsgemäße Turbinenanordnung kann auch zur Befestigung in einem Strömungskanal etwa mit kreisförmigem oder trogförmigem Querschnitt ausgebildet sein. Dann sind die Turbinenanordnung bzw. -einrichtung und der Strömungskanal derart aneinander angepasst, dass der Strömungskanal vor der Turbinenanordnung in seinem Durchmesser A einem größten Durchmesser D des Turbinenkörpers entspricht, sich in Strömungsrichtung entlang der Turbineneinrichtung gleichmäßig aufweitet und hinter der Turbineneinrichtung in Strömungsrichtung der zwei- bis dreifachen Querschnittsfläche des Durchströmquerschnittes der Turbinenkörpers, welche vom Außendurchmesser D und einem Kerndurchmesser d des Turbinenkörpers bestimmt wird, entspricht.

Besonders bevorzugt umfasst die erfindungsgemäße Turbinenanordnung zwei gegenläufig zueinander angeordnete Turbineneinrichtungen. Dabei sind Steigungsrichtungen der Turbinenschaufeln der beiden Turbinekörper gegenläufig zueinander, so dass eine nicht angeströmte und im Lee-Bereich der angeströmten Turbineneinrichtung befindliche Turbineneinrichtung auf den Strömungsverlauf für die Energieerzeugung nicht nachteilig einwirkt. Eine solche Ausführung ist etwa in einem Gezeitenkraftwerk oder auch bei der Energiegewinnung aus Abwasserströmungen in Fabrikationsanlagen wie Chemiewerken vorteilhaft. Hier kann ein Betrieb der Turbinenanordnung bei einer Umkehr der Strömungsrichtung ohne konstruktiven Nachrüstaufwand sichergestellt werden. Besonders bevorzugt wird diese Ausführungsform bei der Anordnung um 180° zueinander versetzt zuführbaren Strömungen eingesetzt.

Dabei können beide Turbineneinrichtungen gemeinsam antreibbar vorgesehen sein, aber jeweils nur die angeströmte Turbineneinrichtung zur Energieumwandlung aktivierbar sein.

Auch können bei einer weiteren erfindungsgemäßen Turbinenanordnung zwei Vorleitelemente gegensinnig so angeordnet sein, dass sie in ihrer Mitte konzentrisch das Turbinenrad aufnehmen. Hier sind bei einem Einsatz mit einer wechselnden Anströmung aus zwei um 180° gedrehten Strömungen die Turbinenschaufeln bzw. Schraubenwendeln in einem Winkel von 45° zur Hauptachse der Turbinenanordnung vorgesehen.

Schließlich sieht die Erfindung in einer noch weiteren Ausführung ein Gehäuseelement mit einem Azimutantrieb vor, der über eine Steuerung die wenigstens eine Turbineneinrichtung so zur Strömungsrichtung ausrichtet, dass ein Leistungsoptimum erzielt werden kann.

Die Materialien der in der Turbinenanordnung und der Teile des Energiewandlers der erfindungsgemäßen geometrischen Anordnung müssen dem Einsatz angepasst werden. Sofern etwa eine Energiegewinnung in Meereswasser oder verunreinigten Abwässern durchgeführt werden soll, sind die Teile aus Kunststoff, rostfreiem Stahl oder zumindest soweit mit resistenten Materialien etwa auf Polyurethanbasis beschichtet, dass die Beschichtung tragende Materialien wie etwa Stahl vor Beeinträchtigungen geschützt sind.

Vorteilhaft ist es auch, wenn bei der Ausführung der Turbine bzw. Turbineneinrichtung mit rotierendem Kegel am größeren Ende der Turbinenblätter in einem Bereich von mehreren Zentimetern der Steigungswinkel gegenüber der Strömung so verändert wird, dass weitere positive Strömungseffekte genutzt werden können. Dies kann hier beispielhaft durch das Kröpfen der Wendeln an der Abströmungsseite erfolgen.

Bei der Anordnung einer Kegelturbine mit festem kegeligen Vorleitrad und spiralförmig aufgesetzten Wendeln sowie in Strömungsrichtung dahinter angeordnetem zylindrischen Turbinenlaufrad mit am Umfang gegenläufig angeordneten Turbinenschaufeln hat es sich als besonders vorteilhaft erwiesen, dass die Wendeln auf dem Kegel unter einem Winkel von 20° und die Turbinenschaufeln auf dem Laufrad unter einem Winkel von bis zu 60° gegenüber der Turbinenhauptachse, welche auch gleichzeitig der Strömungsrichtung entspricht, angeordnet sind.

Die Erfindung wird nachfolgend an Hand von Ausführungsbeispielen mit Bezug auf die begleitenden Figuren genauer beschrieben. Dabei sind die Figuren teilweise in grober Vereinfachung nur skizzenartig gehalten. Es zeigen:
- Figur 1: eine geometrische Anordnung von Schraubenwendeln auf einem sich drehenden kegeligen Grundkörper einer Turbine in übersichtsartiger Seitenansicht,
- Figur 2: eine erste Ausführungsform der erfindungsgemäßen Turbinenanordnung in schematisch vereinfachter Darstellung,
- Figur 3: eine zweite Ausführungsform der erfindungsgemäßen Turbinenanordnungschematisch,
- Figur 4: eine dritte Ausführungsform der erfindungsgemäßen Turbinenanordnung schematisch vereinfacht,
- Figur 5: eine geometrische Anordnung von Schraubenwendeln auf einem sich drehenden zylindrischen Grundkörper mit einem kegeligen Vorleitrad ohne Wendeln schematisch,
- Figur 6: eine geometrische Anordnung von Schraubenwendeln auf einem sich drehenden kegeligen Grundkörper in einem Strömungskanal schematisch vereinfacht und
- Figuren 7 bis 9: jeweils eine weitere Ausführungsform der erfindungsgemäßen Turbinenanordnung in vereinfachter Darstellung.

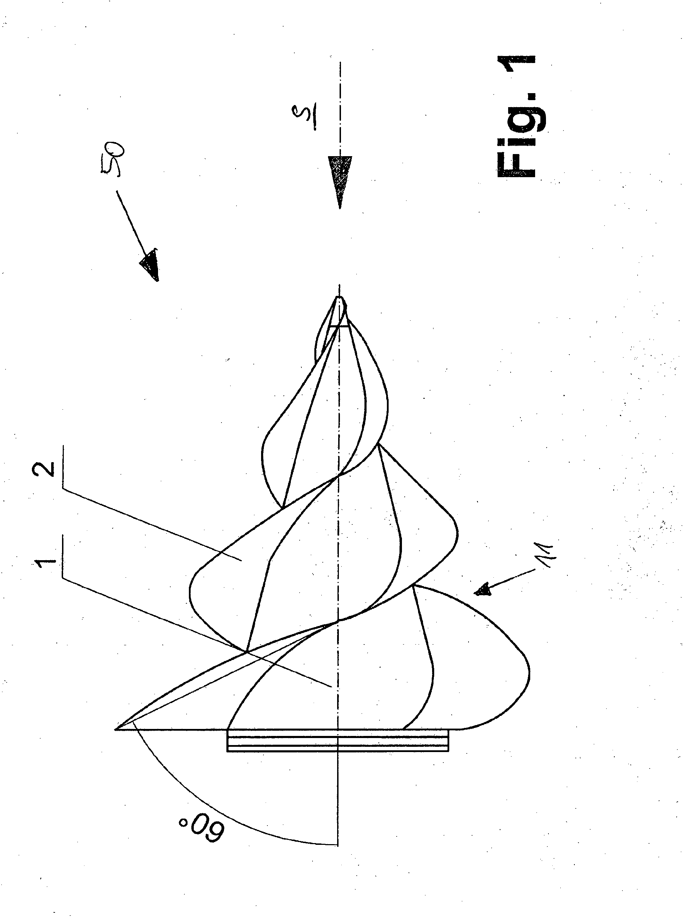

Nachfolgend sind der Einfachheit der Darstellung halber dem Fachmann bekannte mechanisch, elektrisch und/oder elektromagnetisch arbeitende Einrichtungen zur Umwandlung bzw. Erzeugung und Abführung von elektrischer Energie nicht dargestellt. Erfindungsgemäß sind wie in Figur 1 vereinfacht dargestellt auf einem kegeligen Turbinengrundkörper 1 mehrere, gleichmäßig am Umfang versetzt angeordnete Schraubenwendeln 2 so angeordnet, dass zwischen einer Tangente ihrer Umrisslinie und einer Hauptachse der Turbinenanordnung 50 bzw. Turbineneinrichtung 11, welche in einem Betriebszustand der Anordnung 50 in einem Strömungsmedium gleich parallel zu einer in der Figur durch den Pfeil s veranschaulichten Strömungsrichtung ist, einen Winkel von 60° ergibt.

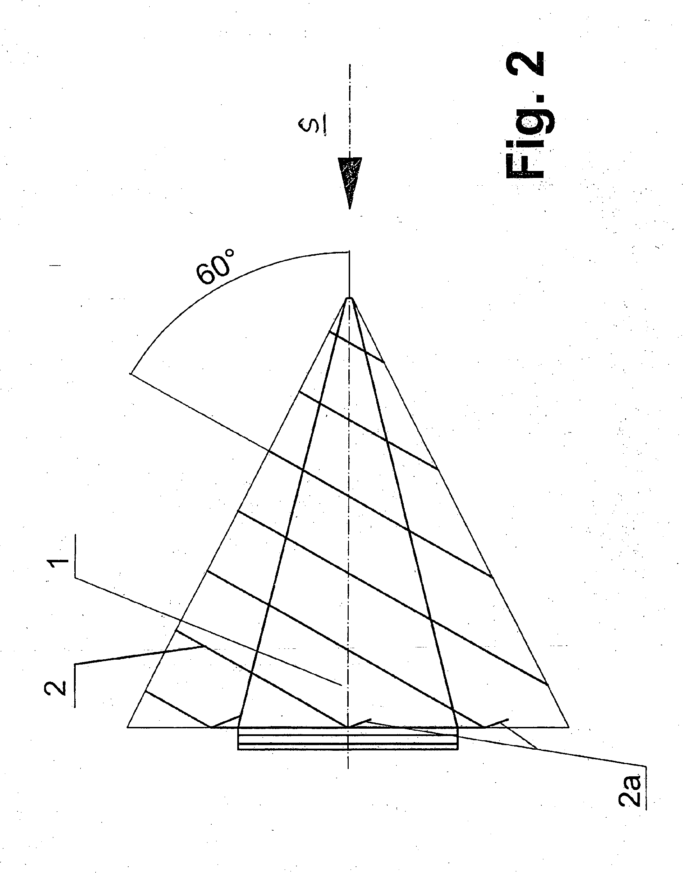

In einer ersten Ausführungsform der Erfindung, dargestellt in Figur 2, sind zur weiteren Verbesserung der Strömungsausnutzung bei einer Energieumwandlung am größeren Ende der Schraubenwendeln 2 Leiteinrichtungen 2a je nach Turbinengröße von einem bis einigen Zentimetern durch Kröpfen angebracht. Dabei ist der Winkel geringfügig gegen die Strömung s abweisend vom Steigungswinkel der Schraubenwendeln angeordnet.

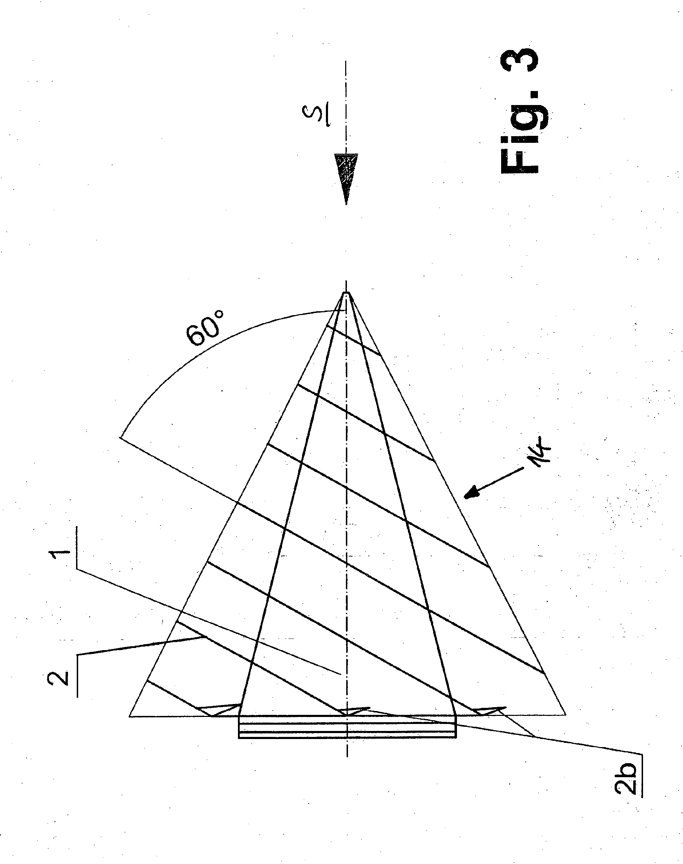

In einer zweiten Ausführungsform, in Figur 3 dargestellt, sind die Leiteinrichtungen durch das Aufbringen, vorzugsweise Aufschweißen von Blechwinkeln 2b auf die Schraubenwendeln 2 realisiert. Dadurch wird die den Turbinenkörper 1 antreibende Strömung s zusätzlich am Wendelende abgefangen und so für eine bessere Ausnutzung der in der Strömung enthaltenen Energie gesorgt.

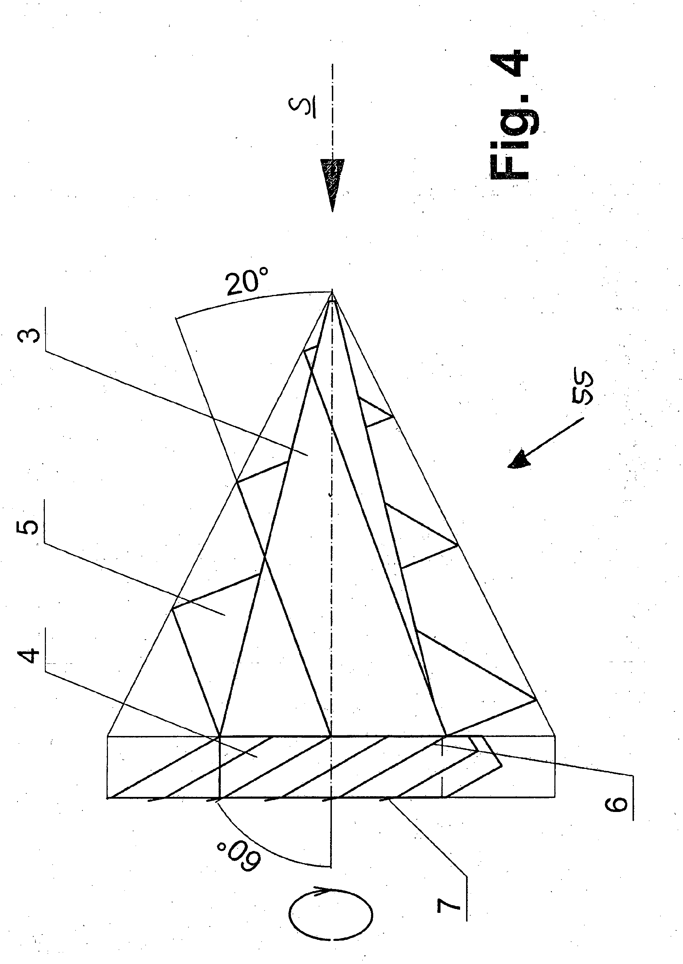

In einer dritten Ausführungsform der erfindungemäßen Turbinenanordnung (55), dargestellt in Figur 4, ist eine Turbine mit einem kegeligen, fest stehenden Vorleitrad 3 und einem dahinter angeordneten, sich drehenden zylindrischen Turbinenrad 4 vorgesehen, bei der sich die auf dem Vorleitrad gleichmäßig angeordneten Schraubenwendeln 5 in einem Winkel von 20° zur Turbinenhauptachse, welche auch die Achse des Strömungsmediums ist, befindet. Die auf dem rotierenden Turbinenlaufrad 4 befindlichen Schaufeln 6 sind in ihrer Anzahl höher als die auf dem Vorleitrad 3 vorzugsweise in ungerader Anzahl angeordneten Wendeln 5 und zu den Wendeln 5 auf dem Vorleitrad 3 gegenläufig unter einem Winkel von 60° zur Turbinenhauptachse angeordnet. Am Ende der Schaufeln 6 sind Leiteinrichtungen 7 zur besseren Energieaufnahme abweichend von der Steigung der Schaufeln 6 und zur Ablenkung der Wirkrichtung der Strömung s angebracht, vorzugsweise angekröpft.

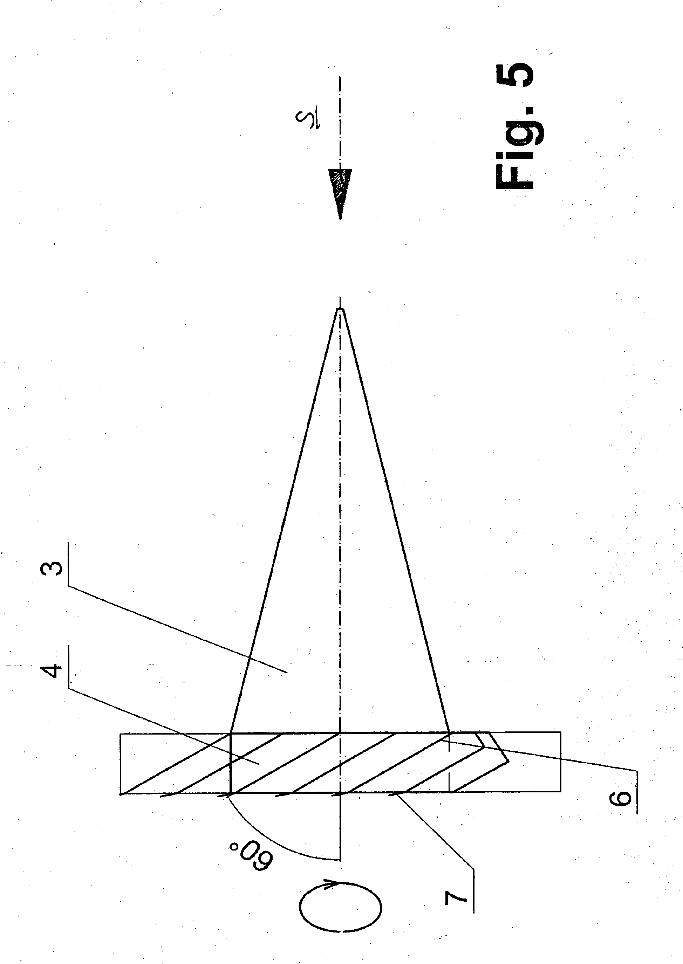

In einer weiteren in Figur 5 dargestellten Ausführungsform weist das feststehende Vorleitrad 3 keine Schraubenwendeln auf. Die Schaufeln 6 sind unter einem Winkel von 60° zur Turbinenhauptachse, welche auch die Achse des Strömungsmediums ist, angebracht.

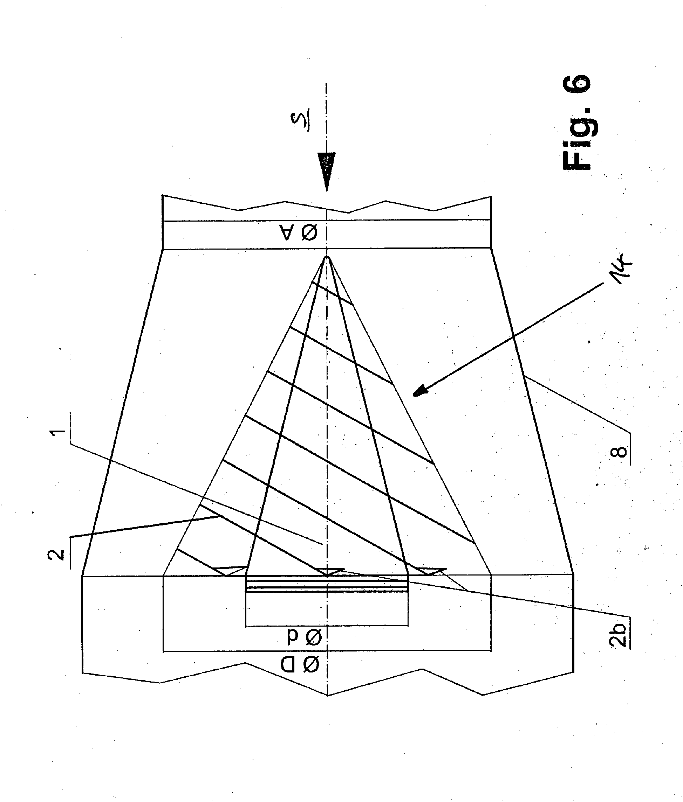

In einer fünften Ausführungsform, dargestellt in Figur 6, ist eine Turbine gemäß der Ausführungsform nach Figur 3 in einen Strömungskanal 8 eingesetzt. Dieser wird so gestaltet, dass sein Rohrinnendurchmesser A zunächst dem Turbinenaußendurchmesser D entspricht. Im Bereich einer Spitze des Turbinenkörpers 1 weitet sich das Strömungsrohr 8 jedoch gleichmäßig so in Strömungsrichtung s auf, dass sich hinter der Turbineneinrichtung 14 ein Rohrquerschnitt des Zwei bis Dreifachen des Durchströmquerschnittes zwischen Turbinenaußendurchmesser D und Turbinenkerndurchmesser d ergibt.

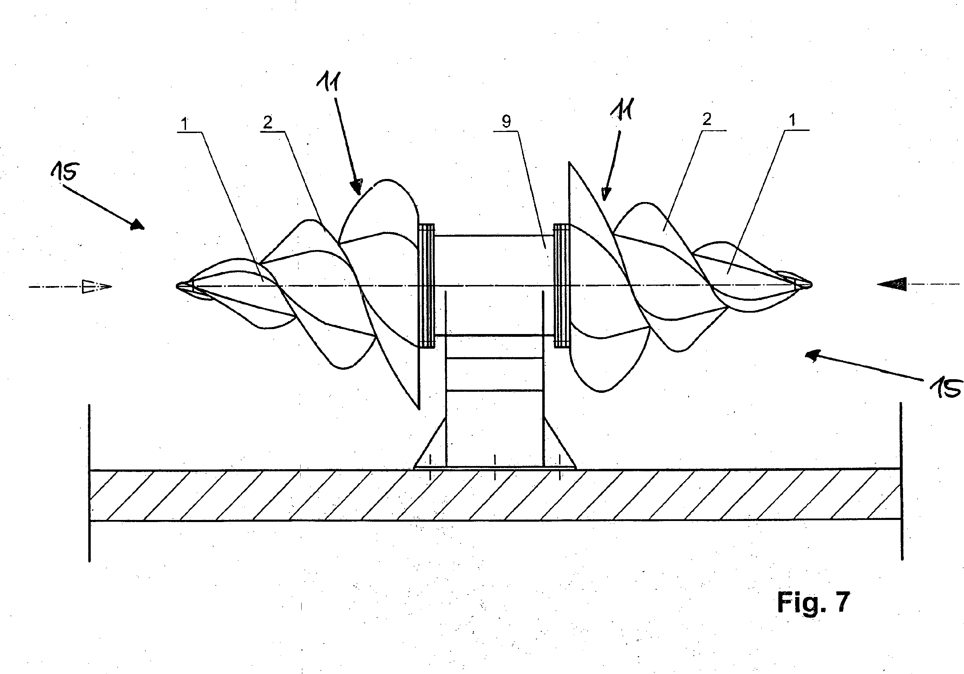

In einer sechsten, in Figur 7 dargestellten Ausführungsform der erfindungsgemäßen Turbinenanordnung 60 sind zwei Energiewandler 15 gegenläufig angeordnet. Der Übersichtlichkeit halber sind bei der Darstellung dieser Ausführungsform wie auch bei den folgenden die Leiteinrichtungen weggelassen worden. Diese können dann bei wechselnden Strömungen in Kanälen oder bei Gezeitenströmungen die jeweilige Strömungsrichtung für die Energieerzeugung nutzen. Dabei wird jeder Energiewandler 15 nur jeweils von der Luv-Seite angetrieben. Die Lee-Seite ist so angeordnet, dass sie die Strömung und somit die Energieumwandlung nicht behindert.

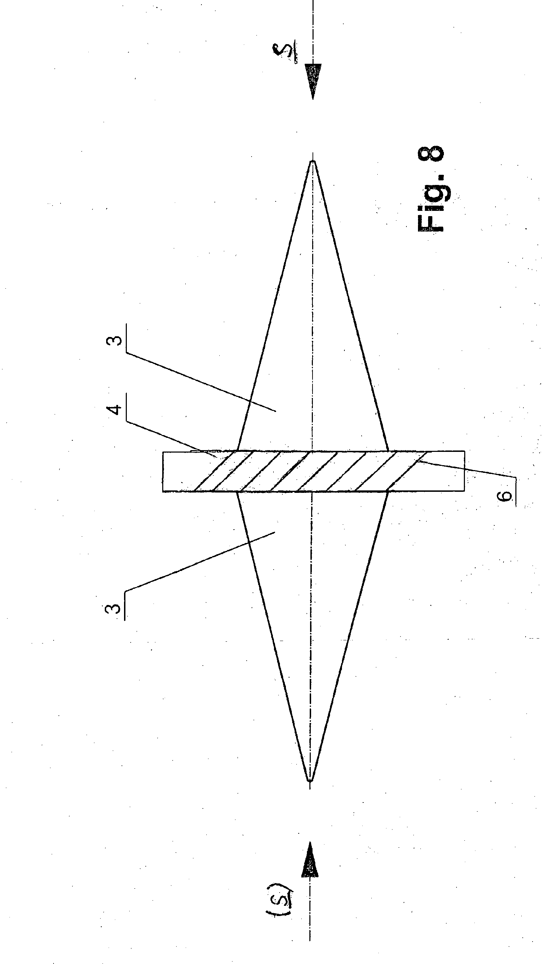

Laut einer in Figur 8 dargestellten weiteren Ausführungsform werden zwei feste Vorleiträder 3 ohne Wendeln so angeordnet, dass in deren Mitte achsfluchtend ein sich drehendes Turbinenrad 4 aufgenommen wird und je nach Anströmungsrichtung das Turbinenrad zur Stromerzeugung in Bewegung versetzt.

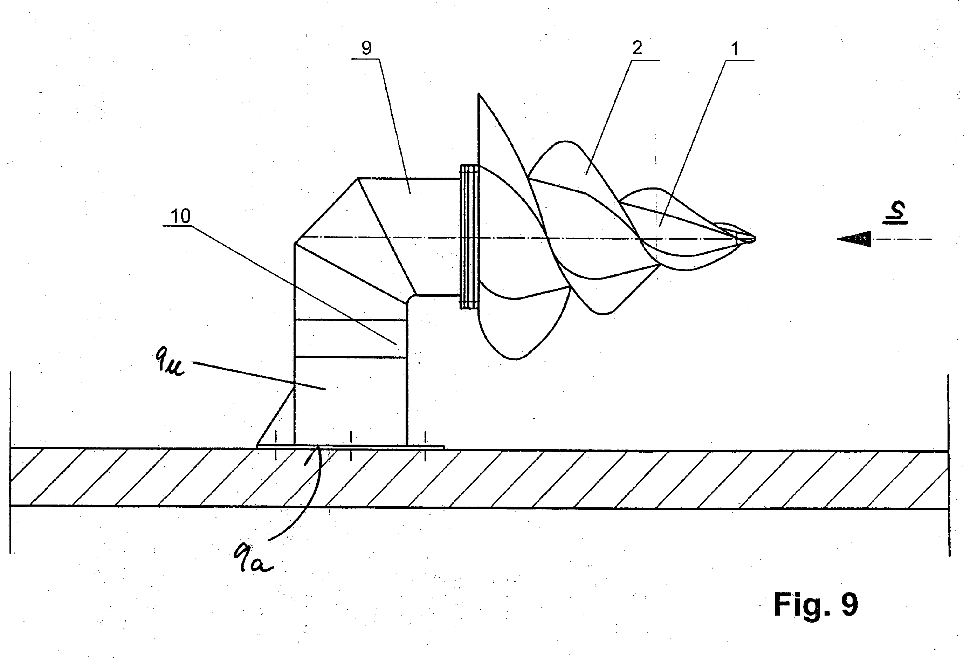

In Ausführungsform acht, dargestellt in Figur 9, ist ein an einem Gehäuse 9 drehbar angeordneter Energiewandler 16 in Strömungsrichtung einstellbar, indem ein Azimutantrieb 10 den Energiewandler 16 über eine Steuerung leistungsoptimal zur Strömung s einstellt. Das Gehäuse 9 ist nach außen abgedichtet und enthält zur Umwandlung in bzw. Erzeugung von elektrischer Energie notwendige Elemente wie Magnetringe, Rotoren, Spulenkerne und auch Anschlüsse an elektrische Leitungen zur Abfuhr der erzeugten elektrischen Energie. Bei einem an Hand der Figur 6 schematisch erläuterten Einsatz der erfindungsgemäßen Anordnung in einem Strömungskanal 8 wird die Anordnung in eine einem Durchmesser der Unterseite 9a eines Gehäusestutzens 9u entsprechenden Bohrung derart eingesetzt, dass der Gehäusestutzen 9u nach außen aus der Kanalwandung herausragt. Dadurch sind die Anschlüsse zur Entnahme der erzeugten Energie zugänglich.

## Patentansprüche

1. Turbinenanordnung zur Umwandlung von in einer Strömung eines Fluids enthaltener Energie, insbesondere kinetischer Energie in elektrische Energie enthaltend:
ein Gehäuseelement (9) zur Aufnahme von Energiewandelungseinrichtungen und Anschlüssen zur Energieabführung,
wenigstens eine Turbineneinrichtung (14) mit einem gegenüber dem Gehäuseelement (9) drehbaren Turbinenkörper (1; 4), an dessen Umfang wenigstens eine Turbinenschaufel (2; 6) zum Angriff der Strömung zur Einleitung einer Drehbewegung vorgesehen ist,
wobei die Turbineneinrichtung in einer Anströmungsrichtung (s) im Wesentlichen kegelförmig ausgebildet ist und
wobei die wenigstens eine Turbinenschaufel (2; 6) bezüglich einer Hauptachse der Turbinenanordnung einen Winkel von 45° bis 65° bildet,
**dadurch gekennzeichnet, dass** die wenigstens eine Turbinenschaufel (2; 6) an ihrer der Strömung abgewandten Stirnseite eine abgewinkelte, zur Richtungsänderung der Strömung und damit zur Begünstigung der Drehung des Turbinenkörpers bestimmte Leiteinrichtung (2a, 2b; 7) aufweist.

2. Turbinenanordnung nach Anspruch 1, **dadurch gekennzeichnet, dass** der Turbinenkörper (1) im Wesentlichen kegelförmig ausgeführt ist und an seinem Umfang wenigstens eine wendelartige Turbinenschaufel (2) aufweist.

3. Turbinenanordnung nach Anspruch 2, **dadurch gekennzeichnet, dass** die Turbineneinrichtung (14) ein in Anströmungsrichtung (s) vorgesehenes kegelförmiges Vorleitelement (3) aufweist, an das sich in Abströmungsrichtung ein als Turbinenrad (4) ausgebildeter Turbinenkörper anschließt, wobei der Turbinenkörper gegenüber dem Vorleitelement (3) drehbar ist.

4. Turbinenanordnung nach Anspruch 3, **dadurch gekennzeichnet, dass** das Vorleitelement (3) wendelförmige und, in einem Winkel von zwanzig Grad zu der Hauptachse der Turbinenanordnung (55) vorgesehene Leitstücke (5) aufweist, die gegenläufig zu der wenigstens einen Turbinenschaufel (6) angeordnet sind.

5. Turbinenanordnung nach Anspruch 4, **dadurch gekennzeichnet, dass** die Anzahl der Leitstücke (5) kleiner als eine Anzahl von Turbinenschaufeln (6) ist.

6. Turbinenanordnung nach einem der Ansprüche 1 bis 5, **dadurch gekennzeichnet, dass** die Leiteinrichtung (2a) entgegen der Strömungsrichtung (s) angekröpft ist.

7. Turbinenanordnung nach einem der Ansprüche 1 bis 5, **dadurch gekennzeichnet, dass** die Leiteinrichtung (2b) aus einem zumindest an einer Seite fest oder drehgelenkig mit der wenigstens einen Turbinenschaufel (6) verbundenen Bauelement gebildet wird.

8. Turbinenanordnung nach Anspruch 3 oder 4, **dadurch gekennzeichnet, dass** zwei Vorleitelemente (3) gegensinnig so angeordnet sind, dass zwischen ihnen das Turbinenrad (4) konzentrisch zur Energieumwandlung aufgenommen wird.

9. Turbinenanordnung nach einem der Ansprüche 1 bis 8, **dadurch gekennzeichnet, dass** sie zur Befestigung in einem Strömungskanal (8) mit kreisförmigem oder trogförmigem Querschnitt ausgebildet ist, wobei der Strömungskanal (8) vor der Turbinenanordnung im Durchmesser (A) einem größten Durchmesser (D) des Turbinenkörpers. (1) entspricht, sich in Strömungsrichtung (s) entlang der Turbineneinrichtung (14) gleichmäßig aufweitet und hinter der Turbineneinrichtung (14) in Strömungsrichtung der zwei- bis dreifachen Querschnittsfläche des Durchströmquerschnittes der Turbinenkörpers, welche vom Außendurchmesser (D) und einem Kerndurchmesser (d) des Turbinenkörpers bestimmt wird, entspricht.

10. Turbinenanordnung nach einem der Ansprüche 1 bis 9, **dadurch gekennzeichnet, dass** sie zwei gegenläufig zueinander angeordnete Turbineneinrichtungen (11) umfasst.

11. Turbinenanordnung nach einem der Ansprüche 1 bis 10, **dadurch gekennzeichnet, dass** beide Turbineneinrichtungen (11) gemeinsam antreibbar sind und dass aber jeweils nur die angeströmte Turbineneinrichtung (11) zur Energieumwandlung aktivierbar ist.

12. Turbinenanordnung nach einem der Ansprüche 1 bis 11, **dadurch gekennzeichnet, dass** das Gehäuseelement (9) einen Azimutantrieb (10) enthält, der über eine Steuerung die wenigstens eine Türbineneinrichtung (11) so zur Strömungsrichtung (s) ausrichtet, das ein Leistungsoptimum erzielt werden kann.

## Claims

1. A turbine arrangement for the purpose of converting energy contained in a flow of a fluid, in particular kinetic energy, into electrical energy, including:
a housing element (9) for the purpose of accommodating energy conversion devices, and connections for the purpose of energy conveyance,
at least one turbine device (14) with a turbine body (1; 4) that can rotate relative to the housing element (9), on the periphery of which is provided at least one turbine blade (2; 6) for purposes of engaging with the flow so as to introduce a rotational movement, wherein
in a direction of flowing against (s) the turbine device is designed in an essentially conical shape, and wherein
the at least one turbine blade (2; 6) forms an angle of 45° to 65° with respect to a main axis of the turbine arrangement,
**characterised in that**, on its end face facing away from the flow the at least one turbine blade (2; 6) has an angled guidance device (2a, 2b; 7) intended for the purpose of altering the direction of the flow, and thereby facilitating the rotation of the turbine body.

2. The turbine arrangement according to claim 1, **characterised in that**, the turbine body (1) is embodied in an essentially conical shape, and on its periphery has at least one turbine blade (2) in the form of a spiral.

3. The turbine arrangement according to claim 2, **characterised in that**, the turbine device (14) has a conically shaped inlet guide element (3) provided in the direction of flowing against (s), onto which a turbine body designed as a turbine wheel (4) connects in the outflow direction, wherein the turbine body can be rotated relative to the inlet guide element (3).

4. The turbine arrangement according to claim 3, **characterised in that**, the inlet guide element (3) has spirally-shaped guide vanes (5) provided at an angle of 20° to the main axis of the turbine arrangement (55), which vanes are arranged opposed to the at least one turbine blade (6).

5. The turbine arrangement according to claim 4, **characterised in that**, the number of guide vanes (5) is less than the number of turbine blades (6).

6. The turbine arrangement according to one of the claims 1 to 5, **characterised in that**, the guidance device (2a) is offset against the flow direction (s).

7. The turbine arrangement according to one of the claims 1 to 5, **characterised in that**, the guidance device (2b) is formed by a device connected at least at one side, rigidly or in a pivoted manner, with the at least one turbine blade (6).

8. The turbine arrangement according to claim 3 or 4, **characterised in that**, two inlet guide elements (3) are arranged in an opposite direction such that the turbine wheel (4) is accommodated concentrically between them for purposes of energy conversion.

9. The turbine arrangement according to one of the claims 1 to 8, **characterised in that**, for the purpose of attachment in a flow channel (8) it is designed with a circular or a trough-shaped cross-section, wherein the flow channel (8) upstream of the turbine arrangement corresponds in its diameter (A) to a maximum diameter (D) of the turbine body (1), it opens out evenly in the flow direction (s) along the turbine device (14), and behind the turbine device (14) in the flow direction it corresponds to between two and three times the cross-sectional area of the flow cross-section of the turbine body, which is determined by the outer diameter (D) and a core diameter (d) of the turbine body.

10. The turbine arrangement according to one of the claims 1 to 9, **characterised in that**, it comprises two turbine devices (11) arranged opposed to one another.

11. The turbine arrangement according to one of the claims 1 to 10, **characterised in that**, both turbine devices (11) can be driven jointly, and **in that**, in each case, however, only the turbine device (11) receiving the incident flow can be activated for the purpose of energy conversion.

12. The turbine arrangement according to one of the claims 1 to 11, **characterised in that**, the housing element (9) contains an azimuthal drive (10), which via a controller aligns the at least one turbine device (11) relative to the flow direction (s) such that an optimum performance can be achieved.

## Revendications

1. Ensemble de turbine pour la conversion en énergie électrique d'une énergie, en particulier d'une énergie cinétique, contenue dans un écoulement d'un fluide, comprenant:
un élément de boîtier (9) destiné à contenir des dispositifs de conversion d'énergie et des raccords pour l'évacuation de l'énergie,
au moins un dispositif de turbine (14) avec un corps de turbine (1; 4) pouvant tourner par rapport à l'élément de boîtier (9), à la périphérie duquel il est prévu au moins une aube de turbine (2; 6) destinée à capter l'écoulement pour l'introduction d'un mouvement de rotation,
dans lequel le dispositif de turbine est configuré essentiellement en forme de cône dans une direction d'arrivée (s), et
dans lequel ladite au moins une aube de turbine (2; 6) forme un angle de 45° à 65° par rapport à un axe principal de l'ensemble de turbine,
**caractérisé en ce que** ladite au moins une aube de turbine (2; 6) présente, sur son côté frontal situé à l'opposé de l'écoulement, un dispositif de guidage coudé déterminé (2a, 2b; 7) pour le changement de direction de l'écoulement et dès lors pour favoriser la rotation du corps de turbine.

2. Ensemble de turbine selon la revendication 1, **caractérisé en ce que** le corps de turbine (1) est configuré essentiellement en forme de cône et présente à sa périphérie au moins une aube de turbine de type hélicoïdal (2).

3. Ensemble de turbine selon la revendication 2, **caractérisé en ce que** le dispositif de turbine (14) présente un élément de guidage amont en forme de cône (3) prévu dans la direction d'arrivée (s), auquel un corps de turbine configuré en forme de roue de turbine (4) se raccorde dans la direction d'écoulement, dans lequel le corps de turbine peut tourner par rapport à l'élément de guidage amont (3).

4. Ensemble de turbine selon la revendication 3, **caractérisé en ce que** l'élément de guidage amont (3) présente des pièces de guidage (5) en forme d'hélice et prévues sous un angle de vingt degrés par rapport à l'axe principal de l'ensemble de turbine (55), qui sont disposées à contre-sens par rapport à ladite au moins une aube de turbine (6).

5. Ensemble de turbine selon la revendication 4, **caractérisé en ce que** le nombre des pièces de guidage (5) est inférieur à un nombre d'aubes de turbine (6).

6. Ensemble de turbine selon l'une quelconque des revendications 1 à 5, **caractérisé en ce que** le dispositif de guidage (2a) est coudé à l'opposé de la direction d'écoulement (s).

7. Ensemble de turbine selon l'une quelconque des revendications 1 à 5, **caractérisé en ce que** le dispositif de guidage (2b) est formé à partir d'un élément de construction assemblé, au moins sur un côté, de façon fixe ou articulée rotative, à ladite au moins une aube de turbine (6).

8. Ensemble de turbine selon la revendication 3 ou 4, **caractérisé en ce que** deux éléments de guidage amont (3) sont disposés en sens contraire, de telle manière que la roue de turbine (4) soit installée entre eux de façon concentrique pour la conversion d'énergie.

9. Ensemble de turbine selon l'une quelconque des revendications 1 à 8, **caractérisé en ce qu'**il est configuré en vue de sa fixation dans un canal d'écoulement (8) avec une section transversale circulaire ou en forme d'auge, dans lequel le canal d'écoulement (8) avant l'ensemble de turbine correspond en diamètre (A) à un très grand diamètre (D) du corps de turbine (1), s'élargit de manière uniforme dans la direction d'écoulement (s) le long du dispositif de turbine (14) et correspond, derrière le dispositif de turbine (14) dans la direction d'écoulement, à une surface de section transversale double à triple de la section transversale d'écoulement du corps de turbine, qui est déterminée par le diamètre extérieur (D) et un diamètre de noyau (d) du corps de turbine.

10. Ensemble de turbine selon l'une quelconque des revendications 1 à 9, **caractérisé en ce qu'**il comprend deux dispositifs de turbine (11) disposés à contre-courant l'un par rapport à l'autre.

11. Ensemble de turbine selon l'une quelconque des revendications 1 à 10, **caractérisé en ce que** les deux dispositifs de turbine (11) peuvent être entraînés en commun mais **en ce que** seul le dispositif de turbine (11) respectivement atteint par l'écoulement peut être activé pour la conversion d'énergie.

12. Ensemble de turbine selon l'une quelconque des revendications 1 à 11, **caractérisé en ce que** l'élément de boîtier (9) contient un entraînement azimutal (10), qui oriente par une commande ledit au moins un dispositif de turbine (11) par rapport à la direction d'écoulement (s), de telle manière que l'on puisse obtenir un optimum de puissance.
